# EUROPEAN PATENT APPLICATION

(11) **EP 4 019 174 A1**
(43) Date of publication of application: **29.06.2022**
(21) Application number: 20315504.9
(22) Date of filing: 23.12.2020
(51) Int. Cl.: B23B 29/034

(54) **A BORING HEAD AND A BORING TOOL ASSEMBLY**

(71) Applicant: Seco Tools Tooling Systems, 67330 Bouxwiller (FR)
(72) Inventor: KOPP-CHTARQUE, Frédéric, 67330 Bouxwiller (FR)
(74) Representative: Sandvik

(57) **Abstract**

A boring head (101) for fixing of a boring tool (102) to a rotatable tool holder, wherein the boring tool is intended for cutting machining of a workpiece upon rotation of the boring tool around an axis of rotation defining an axial direction (Z), the boring head comprising:
- a main body (103) mounted to the rotatable tool holder;
- a piston (104) for holding the boring tool, said piston being received within a guiding cavity (105) of the main body and being movable with respect to the main body in a radial direction (X), wherein a circumferential surface of the piston comprises a flat face (106) extending in parallel with the radial direction;
- a positioning means (110) for radial positioning of the piston within the guiding cavity;
- a combined orientation and fixation device (120) for orienting and fixing the piston with respect to the main body, the combined orientation and fixation device comprising:
∘ a blind sleeve fixedly mounted in the main body, a flexible end wall of the blind sleeve facing the flat face of the piston, and
∘ a tightening screw configured for threaded engagement with the blind sleeve,

wherein the combined orientation and fixation device is configured so that the flexible end wall presses against the flat face of the piston when the tightening screw is tightened, thereby pressing the piston against the main body so as to simultaneously orient and fix the piston with respect to the main body.

## Description

### TECHNICAL FIELD

The present invention relates to the field of accessories for machine tools used for boring operations. In particular, it relates to a boring head for fixing of a boring tool to a rotatable tool holder, and to a boring tool assembly. The boring tool is intended for cutting machining of workpieces upon rotation of the boring tool around an axis of rotation. The workpieces may in particular, but not exclusively, be metallic workpieces. The boring head and boring tool assembly are particularly suitable for producing precise holes with high demands on tolerances in terms of geometry and dimension of the holes.

### BACKGROUND OF THE INVENTION

Boring heads that allow a precise positioning of a replaceable boring tool, mounted on the boring head, in order to control the cutting diameter with high precision are well known. Such boring heads may comprise a movable piston on which the boring tool is mounted, and a positioning means in the form of a micrometre screw. The positioning means is used to move the piston so as to adjust the cutting position of the boring tool, and thereby the cutting diameter. After adjustment of the cutting position, the piston has to be fixed with respect to a main body of the boring head so that the stiffness of the boring head is not compromised during machining.

US8322952 discloses a boring head of the above described type. The boring tool, in the form of an insert holder and a replaceable cutting insert, has a contact flange intended to assure stiffness of the boring tool assembly by abutting a corresponding contact surface of the main body of the boring head. It thereby also orients the boring tool with respect to the boring head. The boring head comprises a spring-loaded tightening means adapted to pull the insert holder towards the main body, before positioning it in the desired cutting position. The boring head further comprises an indirect tightening means for fixing the position of the piston. The boring head offers possibilities to adjust the cutting diameter with high precision.

However, to meet demands on even more narrow machining tolerances, improved solutions for fixing the boring tool in a desired cutting position with an even higher precision are desirable.

### SUMMARY OF THE INVENTION

It is a primary object of the invention to achieve a boring head and a boring tool assembly which are in at least some aspect improved with respect to known boring heads and boring tool assemblies. In particular, it is an object to provide a boring head and a boring tool assembly that allow precise positioning of the boring tool in a correct orientation, for use in fine boring applications. Another object is to achieve a boring head and a boring tool assembly for which the cutting diameter can be smoothly adjusted with little friction.

At least the primary object is achieved by a boring head according to claim 1 and a boring tool assembly according to claim 9.

According to a first aspect of the invention, a boring head for fixing of a boring tool to a rotatable tool holder is provided, wherein the boring tool is intended for cutting machining of a workpiece upon rotation of the boring tool around an axis of rotation defining an axial direction. The boring head comprises:
- a main body configured to be mounted to the rotatable tool holder;
- a piston for holding the boring tool, said piston being received within a guiding cavity of the main body and being movable with respect to the main body in a radial direction of the boring tool, wherein a circumferential surface of the piston comprises a flat face extending in parallel with the radial direction;
- a positioning means for radial positioning of the piston within the guiding cavity;
- a combined orientation and fixation device for orienting and fixing the piston with respect to the main body, the combined orientation and fixation device comprising:
   ∘ a blind sleeve, which is internally threaded and fixedly mounted in the main body, such that a flexible end wall of the blind sleeve faces the flat face of the piston, and
   ∘ a tightening screw configured for threaded engagement with the blind sleeve,
wherein the combined orientation and fixation device is configured so that the flexible end wall presses against the flat face of the piston when the tightening screw is tightened,
thereby pressing the piston against the main body so as to simultaneously orient and fix the piston with respect to the main body.

The proposed boring head uses only a combined orientation and fixation device to simultaneously orient and fix the piston, and thereby also the boring tool attached to the piston, in a desired position with respect to the main body. Thus, a single device is provided for orienting and fixing the piston, with or without the boring tool attached thereto, in a desired cutting position. This has the advantage that an isostatic system which is not overdetermined is achieved, by means of which very fine adjustments of the cutting diameter may be achieved with the boring tool correctly and predictably oriented. In comparison with boring heads in which separate devices are provided for orientation and fixation of the piston and/or the boring tool, a boring head is achieved in which the orientation of the boring tool is not at risk of changing when the piston is being fixed with respect to the main body. Moreover, no direct contact between surfaces of the boring tool and the main body, respectively, is needed to properly orient the boring tool in the cutting position, which direct contact my otherwise change the orientation of the boring tool. In particular for fine boring, this lack of direct contact improves the cutting diameter resolution. For such applications, the cutting forces are normally sufficiently small so that the stiffness achieved without direct contact between the boring tool and the main body is sufficient.

When loosening the tightening screw of the combined orientation and fixation device, the pressure applied by the flexible end wall on the flat face of the piston is reduced. The piston is thereby allowed to slide within the guiding cavity, but with a minimum clearance provided between on one hand the piston, and the other hand the flexible end wall and the guiding cavity.

As the term boring tool is used herein, the boring tool may be a solid boring tool in one piece, or more preferably, an insert holder to which a replaceable cutting insert is mounted. In the latter case, there is no direct contact between on one hand the main body, and on the other hand nor the cutting insert, nor the insert holder. Thus, the insert holder does not need to be in contact with the main body of the boring head to achieve a sufficient stiffness of the boring tool and boring head.

The radial direction of the boring tool, and by definition also of the boring head, is perpendicular to the axial direction. By using the positioning means for radial positioning of the piston within the guiding cavity, a cutting diameter of the boring tool may thereby be adjusted. The positioning means may e.g. be in the form of a positioning screw, such as a micrometre screw. Thus, by the radial positioning of the piston is to be understood an adjustment of a position of the piston in the radial direction of the boring tool. The piston may typically extend with its centre axis in the radial direction of the boring tool. The radial positioning of the piston thus corresponds to a translational movement of the piston along its own centre axis.

The piston comprises a mounting interface for securing the boring tool thereto, e.g. by means of screw mounting.

A hole, e.g. a bore, is provided in the main body for receiving the blind sleeve. The hole opens into the guiding cavity in which the piston is received. The blind sleeve has a flexible end wall, which when the blind sleeve is mounted in the hole faces the flat face of the piston. By flexible is herein intended elastically deformable, such that, when the tightening screw is loosened so that the pressure against the flexible end wall is removed, the flexible end wall springs back and no longer presses against the piston. The tightening screw may advantageously be a rounded point screw, i.e. having a rounded point for pressing against the flexible end wall of the blind sleeve. The tightening screw may alternatively be a flat point screw, i.e. having a flat point for pressing against the flexible end wall.

Optionally, the circumferential surface of the piston comprises a rounded surface portion opposite to the flat face, which rounded surface portion is configured to press against a corresponding rounded surface of the guiding cavity when the tightening screw is tightened. The rounded surfaces, which may preferably have a constant radius of curvature, ensure that the piston does not rotate within the guiding cavity when the tightening screw is tightened. The cutting diameter resolution can thereby be improved.

Optionally, the guiding cavity has a circle cylindrical shape, i.e. it has a circular cross section. The piston preferably has a generally circle cylindrical shape, with a slightly smaller diameter than the guiding cavity, and with the flat face provided on a segment-shaped indentation of the piston. Friction free sliding within the guiding cavity may thereby be achieved when the tightening screw is loosened.

Optionally, the piston comprises a mounting interface for securing the boring tool thereto, wherein said mounting interface is provided at a front end of the piston, and wherein the positioning means is provided at an opposite rear end of the piston. The circumferential surface of the piston extends between the front end and the rear end of the piston. In this embodiment, the boring head may be referred to as a radial boring head, which is generally understood as a boring head that may be used for boring with relatively large cutting diameters that are larger than the width of the boring head. During the boring operation, the boring head may thus be located within the formed bore.

Optionally, the blind sleeve is glued to the main body. The glue should be selected so as to achieve a non-elastic fixation of the blind sleeve within the main body, thereby ensuring correct orientation of the piston when the piston is fixed in a desired radial position of the boring tool using the combined orientation and fixation device.

Optionally, the blind sleeve is pivotally adjustable during mounting thereof in the main body, i.e. adjustment of a centre axis of the blind sleeve with respect to a longitudinal axis of the hole in which the blind sleeve is mounted. After pivotal adjustment, the centre axis of the blind sleeve and the longitudinal axis of the hole may be non-parallel. For example, the centre axis of the blind sleeve may, when fixed, deviate from the longitudinal axis of the hole by ± 2°, or ± 1.5°, or less. After mounting of the blind sleeve in the main body, the exact orientation of the blind sleeve with respect to the piston may thereby be adjusted before the blind sleeve is finally fixed to the main body. Thereby, it is possible to compensate for manufacturing defects of the combined orientation and fixation device itself, the piston and/or the main body, that may otherwise cause misalignment of the piston.

The blind sleeve should, when correctly oriented after pivotal adjustment, be fixed in the correct orientation by for example gluing it to the main body. To orient and fix it during a first assembly of the boring head, the blind sleeve is inserted into the hole of the main body, with glue applied and with the flexible end wall of the blind sleeve facing the flat face of the piston. When the flexible end wall contacts the flat face of the piston, it will self-align with the flat face by pivotal adjustment of the blind sleeve. The glue thereafter dries to irreversibly fix the blind sleeve in its self-aligned position. Thereafter, when the boring head is to be used in a boring operation, the tightening screw is tightened in the blind sleeve by applying a tightening torque sufficient to press the flexible end wall of the blind sleeve firmly towards the flat face of the piston. For example, a tightening torque of about 5-15 times of a tightening torque used to orient the blind sleeve during the first assembly may be applied. Thus, when the tightening screw is not pressing on the flexible end wall, the piston is allowed to slide, but with a minimum clearance provided between the piston on one hand, and the guiding cavity and the flexible end wall on the other hand.

Optionally, the blind sleeve further comprises an external thread being in threaded engagement with a screw hole of the main body, wherein one of the external thread of the blind sleeve and an internal thread of the screw hole has a thread depth that decreases in a direction towards the flexible end wall, i.e. in an inward direction of the screw hole. In this way, the blind sleeve is configured to allow pivotal adjustment of the blind sleeve during mounting thereof in the main body as described above.

Optionally, the other one of the external thread of the blind sleeve and the internal thread of the screw hole has a constant thread depth. To facilitate manufacturing of the components of the boring head, the screw hole of the main body preferably has a constant thread depth, while the external thread of the blind sleeve has a thread depth that decreases towards the flexible end wall. This facilitates manufacturing, since the thread depth of the external thread is easier to control during machining of the thread.

According to a second aspect, a boring tool assembly is provided, comprising the boring head according to the first aspect, and a boring tool configured to be mounted to the boring head. Advantages and advantageous embodiments of the boring tool largely correspond to those of the boring head according to the first aspects, and will therefore not be described in detail. It is to be understood that all embodiments of the boring head as described in connection with the first aspect also apply to the boring tool assembly according to the second aspect, and vice versa.

A cutting diameter of the boring tool assembly may be adjustable in a cutting diameter range between a minimum cutting diameter and a maximum cutting diameter using the positioning means.

Optionally, the boring tool assembly is configured so that the boring tool, when mounted to the piston, is movable over the cutting diameter range without contacting the main body of the boring head. The piston with the boring tool mounted thereto may thereby be moved in the radial direction of the boring tool between the minimum and maximum cutting diameters without any friction arising between the boring tool and the main body.

Optionally, the boring tool assembly is configured so that, over the cutting diameter range, there is no contact between the boring tool and the main body when the boring tool is mounted to the piston and the piston is oriented and fixed using the combined orientation and fixation device. A gap of e.g. at least 0.1-0.7 mm may be provided between the boring tool and the main body. In this way, hyperstatic orientation of the piston and the boring tool in any of the cutting positions is avoided, since the orientation is only defined by the piston's contact with the main body and with the flexible end wall of the blind sleeve, and not by any contact between the boring tool and the main body.

Optionally, the boring tool comprises an insert holder configured to be removably mounted to the piston, and a cutting insert configured to be removably mounted to the insert holder. The cutting insert may e.g. be mounted to the insert holder by means of clamping or screw mounting it thereto. Alternatively, a boring tool in one piece may be used, i.e. a boring tool in which a cutting edge and a mounting interface for securing the boring tool to the piston is provided in the same component.

Optionally, the boring tool is mounted at a front end of the piston, opposite to the positioning means. The boring tool assembly is in this embodiment configured as a so called radial boring tool, in which the cutting diameter of the boring tool is larger than a width of the main body of the boring head. During the boring operation, the boring head may thus be located within the formed bore.

Further advantageous features and advantages of the invention will appear from the following detailed description.

### BRIEF DESCRIPTION OF THE DRAWINGS

Embodiments of the invention will in the following be described by means of example with reference to the appended drawings, in which:
- Fig. 1: is a perspective view showing a boring tool assembly according to an embodiment of the invention,
- Fig. 2: is a perspective view of a boring head according to an embodiment of the invention,
- Fig. 3a-b: are side views of the boring head in fig. 2 with a boring tool mounted thereto,
- Fig. 4a-b: show sections along the lines IVa-Iva in fig. 3a and IVb-IVb in fig. 3b, respectively,
- Fig. 4c: is a detail view from fig. 4b,
- Fig. 4d: is a detail view from fig. 4a, and
- Fig. 5: shows a section along the line V-V in fig. 4a.

The drawings are schematic and are not necessarily drawn to scale. Details may have been omitted.

### DETAILED DESCRIPTION OF PREFERRED EMBODIMENTS

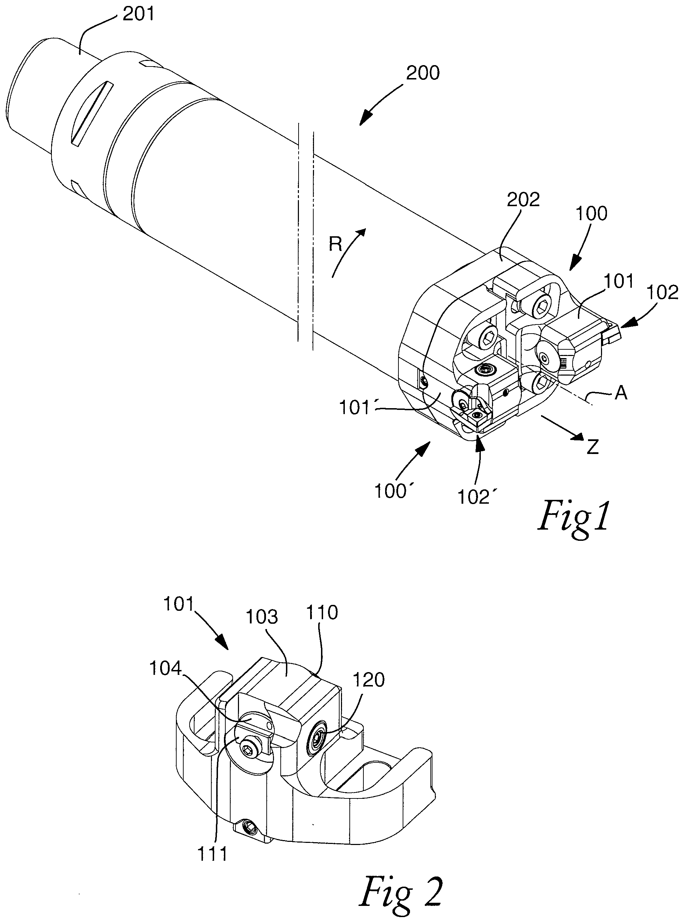

Fig. 1 shows a rotatable tool holder 200 onto which two boring tool assemblies 100, 100' according to an embodiment of the invention are mounted. The rotatable tool holder 200 extends along an axis of rotation A, defining an axial direction Z, around which axis A the tool holder 200 is rotatable in a direction R. The rotatable tool holder 200 has a rear end comprising an adapter 201 configured for mounting the rotatable tool holder 200 in e.g. a machine spindle, a driving sleeve, a chuck or a socket. At a front end of the rotatable tool holder 200, a bridge 202 is provided, on which the boring tool assemblies 100, 100' are in turn mounted. Each boring tool assembly 100, 100' comprises a boring head 101, 101' and a boring tool 102, 102'. The boring tools 102, 102' are intended for cutting machining of a workpiece upon rotation of the rotatable tool holder 200 around the axis of rotation A.

Of course, the rotatable tool holder 200 may have many different configurations depending on the boring application. The bridge 202 may also have different configurations and dimensions depending on the desired cutting diameter and intended boring application. Likewise, the boring tool assemblies 100, 100' may or may not be identical, or only one boring tool assembly 100 may be provided, with a balancing counterweight mounted opposite the boring tool assembly. For example, if two boring tool assemblies are provided, one of the boring tool assemblies may be configured for rough boring (not shown), and the other one for fine boring. The tool assemblies 100, 100' shown herein are both intended for fine boring applications.

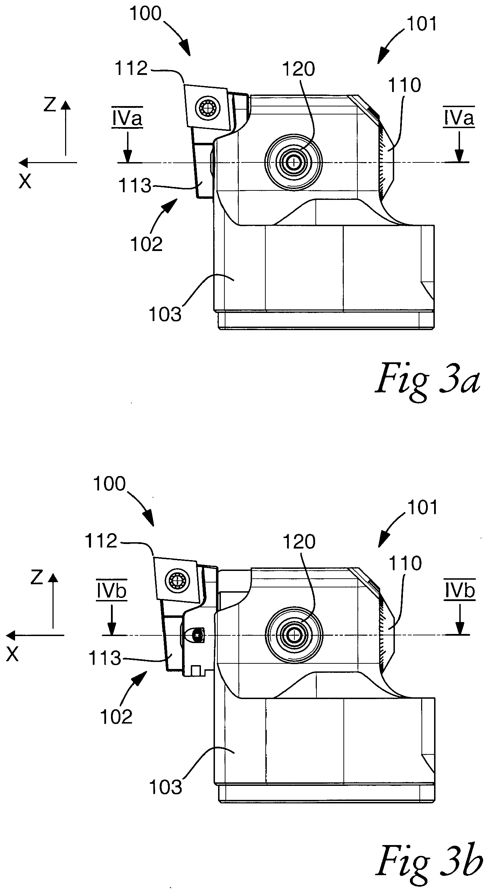

Reference is now made to figs. 2-5, showing the boring head 101 in further detail. Fig. 2 shows the boring head 101 without boring tool 102, while figs. 3a-5 shows the boring head 101 with a boring tool 102 mounted thereto.

The boring head 101 comprises a main body 103 configured to be mounted to the bridge 202 by fastening members. It further comprises a piston 104 received within a guiding cavity 105 of the main body 103 and being movable with respect to the main body 103 in a radial direction X, perpendicular to the axial direction Z. The piston 104 has a generally circle cylindrical shape with a centre axis extending in the radial direction. Also the guiding cavity 105 has a circle cylindrical shape. A circumferential surface of the piston comprises a flat face 106 extending in parallel with the radial direction X. The flat face 106 is provided on a segment-shaped indentation of the piston 104.

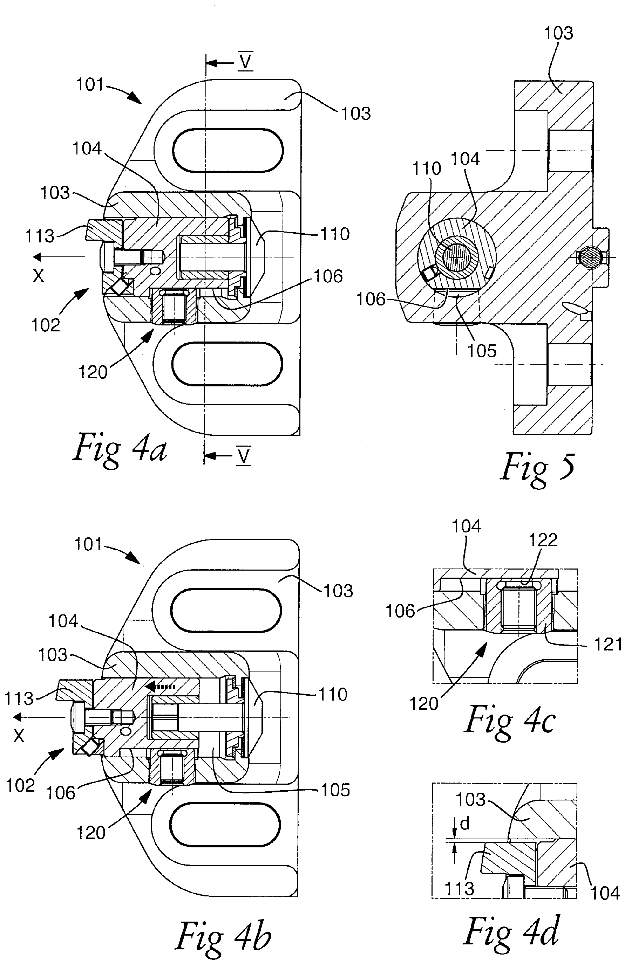

A positioning means 110 in the form of a micrometre screw is provided for radial positioning of the piston 104 within the guiding cavity 105, i.e. positioning in the radial direction X. To achieve this radial positioning, the piston 104 is thus translated along its own centre axis. The positioning means 110 is located at a rear end of the piston, opposite to a front end at which a mounting interface 111 for securing the boring tool 102 to the piston by means of a fastening member is provided. A cutting diameter of the boring tool assembly 100 is adjustable in a cutting diameter range between a minimum cutting diameter, illustrated in fig. 3a and fig. 4a, and a maximum cutting diameter, illustrated in figs. 3b and 4b, using the positioning means 110.

In the shown embodiment, the boring tool 102 comprises a replaceable cutting insert 112 and an insert holder 113 to which the cutting insert 112 is removably attached.

The boring head 101 further comprises a combined orientation and fixation device 120 for orienting and fixing the piston 104 with respect to the main body 103 by means of indirect tightening. The combined orientation and fixation device 120 comprises a blind sleeve 121, which is internally threaded and fixedly mounted in a screw hole of the main body 103, which screw hole opens into the guiding cavity 105. A flexible end wall 122 of the blind sleeve 121 thereby faces the flat face 106 of the piston 104 located in the guiding cavity 105. The combined orientation and fixation device 120 further comprises a tightening screw (not shown) configured for threaded engagement with the internal thread of the blind sleeve 121 so as to, when fully engaged, press on the flexible end wall 122. Thereby, the flexible end wall 122 in turn presses against the flat face 106 of the piston 104 and the piston 104 is consequently pressed against the main body 103 so as to simultaneously orient and fix the piston 104 with respect to the main body 103, when the boring tool 102 is in a desired cutting position.

Since the piston 104 has a generally circle cylindrical shape, the circumferential surface of the piston 104 comprises a rounded surface portion opposite to the flat face 106, which rounded surface portion is pressed against a corresponding rounded surface of the guiding cavity 105 when the tightening screw is tightened. The piston 106 thereby automatically aligns within the guiding cavity 105.

The blind sleeve 121 of the combined orientation and fixation device 120 is fixed to the main body 103 in such a way that a proper orientation of the piston 104 and a boring tool 102 mounted thereto is always ensured in all possible cutting positions, and so that a minimal clearance between the piston 104 and the flexible end wall 122, allowing translational movement of the piston 104, is provided whenever the tightening screw does not apply a pressure on the flexible end wall 122. The blind sleeve 121 is in the shown embodiment mounted and fixed to the main body 103 using a combination of threaded engagement and glue. For this purpose, the blind sleeve 121 is provided with an external thread having a slightly conical shape, i.e. having a thread depth that decreases in a direction towards the flexible end wall 122. The screw hole in the main body 103 has a constant thread depth, so that when the blind sleeve 121 is engaged within the screw hole, it is allowed to pivot slightly in the screw hole. To fix the position of the blind sleeve 121 with respect to the main body 103 during a first assembly of the boring head 101, the blind sleeve 121 is engaged with the screw hole of the main body 103, e.g. by means of the tightening screw, so that the flexible end wall 122 contacts and aligns with the flat face 106 of the piston 104 by pivotal adjustment of the blind sleeve 121. Glue applied between the external thread of the blind sleeve 121 and the internal thread of the screw hole of the main body 103 dries and fixes the blind sleeve 121 with a centre axis thereof correctly oriented with respect to the flat face 106. Thus, in use, the blind sleeve 121 is firmly and irreversibly affixed to the main body 103.

When the boring head is to be used in a boring operation, the boring tool 102 is mounted to the mounting interface 111 of the piston 104. The tightening screw of the combined orientation and fixation device 120 is loosened so that the piston 104 is allowed to slide in the radial direction X. The desired cutting diameter is thereafter set using the positioning means 110. Subsequently, the tightening screw is tightened to press against the flexible end wall 122 of the blind sleeve 121, whereby the piston 104 is locked / fixed at the set cutting diameter. Thanks to the minimal clearance provided between the piston 104 and the flexible end wall 122, the orientation of the piston 104 does not change when tightening the tightening screw.

The boring tool assembly 100 is configured so that the boring tool 102, when mounted to the piston 104, is movable over the entire cutting diameter range without contacting the main body 103 of the boring head 101. A small gap is at all times provided between the boring tool 102 and the main body 103. Moreover, over the entire cutting diameter range, there is no contact between the boring tool 102 and the main body 103 when the boring tool 102 is mounted to the piston 104 and the piston 104 is oriented and fixed using the combined orientation and fixation device 120. This can be clearly seen in fig. 4d, which is a detail view from fig. 4a, illustrating the minimum cutting diameter in which the boring tool 102 only protrudes partially from the boring head 101. As can be seen, a small gap d is provided between the main body 103 and the boring tool 102. Due to the minimal clearance provided between the piston 104 and the flexible end wall 122 when the tightening screw of the combined orientation and fixation device 120 is not tightened, the gap d does not change significantly when the tightening screw is loosened/tightened.

The invention is of course not limited to the embodiments disclosed, but may be varied and modified within the scope of the following claims. For example, the boring head and boring tool assembly may be configured for use with many different types of shanks and machine adapters. In other embodiments, the boring tool may be of a type extending mainly in the axial direction of the boring tool, i.e. a so called axial boring tool, instead of the radial boring tool described above. In such an axial boring tool, the cutting diameter of the boring tool is smaller than a width of the main body of the boring head.

## Claims

1. A boring head (101) for fixing of a boring tool (102) to a rotatable tool holder (200), wherein the boring tool (102) is intended for cutting machining of a workpiece upon rotation of the boring tool (102) around an axis of rotation (A) defining an axial direction (Z), the boring head (101) comprising:
- a main body (103) configured to be mounted to the rotatable tool holder (200);
- a piston (104) for holding the boring tool (102), said piston (104) being received within a guiding cavity (105) of the main body (103) and being movable with respect to the main body (103) in a radial direction (X) of the boring tool (102), wherein a circumferential surface of the piston (104) comprises a flat face (106) extending in parallel with the radial direction (X);
- a positioning means (110) for radial positioning of the piston (104) within the guiding cavity (105);
- a combined orientation and fixation device (120) for orienting and fixing the piston (104) with respect to the main body (103), the combined orientation and fixation device (120) comprising:
∘ a blind sleeve (121), which is internally threaded and fixedly mounted in the main body (103), such that a flexible end wall (122) of the blind sleeve (121) faces the flat face (106) of the piston (104), and
∘ a tightening screw configured for threaded engagement with the blind sleeve (121),
wherein the combined orientation and fixation device (120) is configured so that the flexible end wall (122) presses against the flat face (106) of the piston (104) when the tightening screw is tightened, thereby pressing the piston (104) against the main body (103) so as to simultaneously orient and fix the piston (104) with respect to the main body (103).

2. The boring head according to claim 1, wherein the circumferential surface of the piston (104) comprises a rounded surface portion opposite to the flat face (106), which rounded surface portion is configured to press against a corresponding rounded surface of the guiding cavity (105) when the tightening screw is tightened.

3. The boring head according to claim 1 or 2, wherein the piston (104) comprises a mounting interface (111) for securing the boring tool (102) thereto, wherein said mounting interface (111) is provided at a front end of the piston (104), and wherein the positioning means (110) is provided at an opposite rear end of the piston (104).

4. The boring head according to any one of the preceding claims, wherein the blind sleeve (121) is glued to the main body (103).

5. The boring head according to any one of the preceding claims, wherein the blind sleeve (121) is pivotally adjustable during mounting thereof in the main body (103).

6. The boring head according to any one of the preceding claims, wherein the blind sleeve (121) further comprises an external thread being in threaded engagement with a screw hole of the main body (103), wherein one of the external thread of the blind sleeve (121) and an internal thread of the screw hole has a thread depth that decreases in a direction towards the flexible end wall (122).

7. The boring head according to claim 6, wherein the other one of the external thread of the blind sleeve (121) and the internal thread of the screw hole has a constant thread depth.

8. The boring head according to any one of the preceding claims, wherein the guiding cavity (105) has a circle cylindrical shape.

9. A boring tool assembly (100) comprising the boring head (101) according to any one of the preceding claims, and a boring tool (102) configured to be mounted to the boring head (101).

10. The boring tool assembly according to claim 9, wherein a cutting diameter of the boring tool assembly (100) is adjustable in a cutting diameter range between a minimum cutting diameter and a maximum cutting diameter using the positioning means (110).

11. The boring tool assembly according to claim 10, wherein the boring tool assembly is configured so that the boring tool (102), when mounted to the piston (104), is movable over the cutting diameter range without contacting the main body (103) of the boring head (101).

12. The boring tool assembly according to claim 10 or 11, wherein the boring tool assembly (100) is configured so that, over the cutting diameter range, there is no contact between the boring tool (102) and the main body (103) when the boring tool (102) is mounted to the piston (104) and the piston (104) is oriented and fixed using the combined orientation and fixation device (120).

13. The boring tool assembly according to any one of claims 9-12, wherein the boring tool (102) comprises an insert holder (113) configured to be removably mounted to the piston (104), and a cutting insert (112) configured to be removably mounted to the insert holder (113).

14. The boring tool assembly according to any one of claims 9-13, wherein the boring tool (102) is mounted at a front end of the piston (104), opposite to the positioning means (110).
